# EUROPÄISCHE PATENTSCHRIFT

(11) **EP 1 020 497 B1**
(45) Veröffentlichungstag und Bekanntmachung des Hinweises auf die Patenterteilung: **17.03.2004**
(21) Anmeldenummer: 99126254.4
(22) Anmeldetag: 31.12.1999
(51) Int. Cl.: C09B 67/52, C09B 48/00, C09B 67/22, C09D 11/02, C08K 5/3437

(54) **Chinacridon-Mischkristallpigmente der gamma-Phase**
Mixed crystals of quinacridone pigments in the gamma phase
Cristaux mixtes de pigments de quinacridones dans la phase gamma

(30) Priorität: 14.01.1999 DE 19901060
(43) Veröffentlichungstag der Anmeldung: 19.07.2000
(73) Patentinhaber: Clariant GmbH, 65929 Frankfurt am Main (DE)
(72) Erfinder: Urban, Manfred, 65205 Wiesbaden (DE); Böhmer, Martin, 61267 Neu-Anspach (DE); Weber, Joachim, Dr., 65929 Frankfurt (DE); Schnaitmann, Dieter, Dr., 65817 Eppstein (DE); Haberlick, Margit, 65520 Bad Camberg (DE)

(56) Entgegenhaltungen:
- EP-A- 0 544 160
- EP-A- 0 799 862
- EP-A- 0 896 034
- GB-A- 955 854
- US-A- 3 836 379
- US-A- 4 099 980
- US-A- 4 777 105
- DATABASE WPI Derwent Publications Ltd., London, GB; AN 1978-37167a XP002191461 & JP 53 039324 A (TOYO SODA)
- PATENT ABSTRACTS OF JAPAN vol. 1997, no. 08, 29. August 1997 (1997-08-29) & JP 09 110867 A (DAINIPPON INK &CHEM INC), 28. April 1997 (1997-04-28)

## Beschreibung

Gegenstand der vorliegenden Erfindung sind neue Chinacridonmischkristallpigmente und ihre Verwendung als Farbmittel zum Pigmentieren von hochmolekularen organischen Materialien.

Chinacridone sind bekannte Verbindungen, die als Pigmente verwendet werden. In der Praxis werden hohe Anforderungen an ihre Echtheiten und coloristischen Eigenschaften gestellt. In technischem Maßstab erfolgt ihre Herstellung durch Oxidation von Dihydrochinacridonen in alkalischem Medium in Gegenwart von Lösemitteln und anschließender Trocken- oder Naßmahlung der erhaltenen grobkristallinen Rohpigmente oder durch Ringschluß von 2,5-Dianilinoterephthalsäure in Polyphosphorsäure oder Polyphosphorsäureester und anschließende Phasenumwandlung und Finish der erhaltenen feinteiligen Rohpigmente mit organischen Lösemitteln.

Die Herstellung von Chinacridonmischkristallpigmenten wird in den nachfolgenden Patentschriften beschrieben.

Die US-PS 4 099 980 beschreibt die Herstellung von Chinacridonmischkristallpigmenten, bestehend aus 85-99 % unsubstituiertem Chinacridon und 1-15 % 4,11-Dichlorchinacridon, die in der γ-Phase des unsubstituierten Chinacridons vorliegen.

Die US-PS 3 160 510 beschreibt die Herstellung von Chinacridonmischkristallpigmenten durch Trockenmahlung der Rohpigmentmischungen mit Salz und anschließende Lösemittelbehandlung der abgetrennten Mahlgüter oder durch Schwefelsäureumfällung der Pigmentmischungen und anschließende Lösemittelbehandlung der getrockneten feinteiligen Rohpigmente.

Von unsubstituiertem Chinacridon der γ-Phase werden vier Phasen beschrieben.
Die γI-Phase wird in der US-PS 3 074 950 und in der EP-A 0 267 877 beschrieben. Sie zeigt im Röntgenspektrum drei kräftige Linien beim doppelten Glanzwinkel 2 θ bei 6,6°, 13,9° und 26,5°, drei mittlere Linien bei 13,2 °, 13,5 ° und 23,8 ° und vier schwache Linien bei 17,1°, 20,5°, 25,2° und 28,6°.
Die γII-Phase wird in der US-PS 2 844 484, in der EP-A 0 267 877 und in der DE-PS 1 184 881 beschrieben. Sie zeigt im Röntgenspektrum drei kräftige Linien beim doppelten Glanzwinkel 2 θ bei 6,6°, 13,9° und 26,3°; fünf mittlere Linien bei 13,2°, 13,4° und 23,6°, 25,2° und 28,3° und zwei schwache Linien bei 17,1° und 20,4°.
Die γIII-Phase wird in der EP-A 0 530 142 beschrieben. Sie zeigt im Röntgenspektrum vier kräftige Linien beim doppelten Glanzwinkel 2 θ bei 6,7°, 13,3°, 14,0° und 26,6 °; eine mittlere Linie bei 13,6° und sieben schwache Linien bei 17,2°, 20,6°, 21,9°, 24,0°, 25,3°, 28,1° und 28,8°.
Die γIV-Phase wird in der Japanischen Offenlegungsschrift JP-OS 53-39324 beschrieben. Sie zeigt im Röntgenspektrum drei kräftige Linien beim doppelten Glanzwinkel 2 θ bei 6,2°, 13,6° und 26,5°; drei mittlere Linien bei 12,5°, 25,8° und 27,7° und drei schwache Linien bei 16,5°, 20,5° und 24,0°. Die mittleren Linien bei 25,8° und 27,7° 2 θ sind auf geringe Mengen α-Phase zurückzuführen.

Es wurde gefunden, daß Mischungen aus 82,5 bis 99 % unsubstituiertem Chinacridon der γ-Phase und 1 bis 17,5 % von einem oder mehreren, insbesondere 1 oder 2, substituierten Chinacridonen, unter bestimmten, erfindungsgemäßen Bedingungen Mischkristalle, auch feste Lösungen genannt, bilden. Unter Mischkristallen versteht man, daß eine oder mehrere, meist in einem nichtstöchiometrischen Verhältnis zu einer Kristallphase zugesetzte Komponente(n) und die Wirtsverbindung in einem gemeinsamen Gitter kristallisieren. Das Röntgenbeugungsdiagramm eines Mischkristalls zeigt dann z.B. nur die Reflexe des (in vielen Fällen aufgeweiteten) Kristallgitters der Wirtsverbindung oder auch eines ähnlichen oder auch eines deutlich anderen Kristallgitters, während im Röntgenbeugungsdiagramm einer entsprechenden mechanischen Mischung die Reflexe aller Komponenten nachweisbar sind.

Gegenstand der Erfindung sind daher Mischkristallpigmente der Chinacridonreihe bestehend aus
a) 82,5 bis 99 Gew.-%, vorzugsweise 85 bis 95 Gew.-%, insbesondere 87 bis 93 Gew.-%, an unsubstituiertem Chinacridon der γ-Phase der allgemeinen Formel (I), 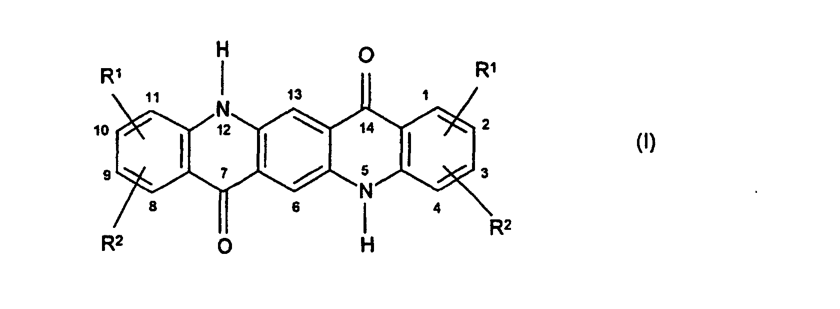 in welcher R¹ und R² Wasserstoffatome bedeuten und
b) 1 bis 17,5 Gew.-%, bevorzugt 5 bis 15 Gew.-%, insbesondere 7 bis 13 Gew.-%, eines oder mehrerer, in 2,9- und/oder 3,10-Stellung substituierter Chinacridone der allgemeinen Formel (I), worin die Substituenten R¹ und R² gleich oder verschieden sind und Chlor-, Brom-, Fluoratome oder C₁-C₄-Alkyl-, C₁-C₄-Alkoxy- oder Carbonamidgruppen, die durch C₁-C₆-Alkylgruppen substituiert sein können, und R¹ zusätzlich ein Wasserstoffatom sein kann, bedeuten.

Bevorzugte Mischkristallpigmente sind solche, die eine oder zwei substituierte Chinacridone (b) der allgemeinen Formel (I) enthalten, worin R¹ Wasserstoff, Chlor, Methyl, Methoxy oder Carbonamid, und R² Chlor, Methyl, Methoxy oder Carbonamid bedeuten.

Die coloristischen Eigenschaften der erfindungsgemäßen Mischkristallpigmente unterscheiden sich erheblich von denen der entsprechenden mechanischen Mischungen der Einzelkomponenten. Sie besitzen insbesondere tiefere Farbtöne und hohe Farbstärken. Es können nach dem Verfahren auch hochtransparente Pigmente erhalten werden, die daher besonders für die Herstellung von Metalliclacken geeignet sind. Die Echtheiten sind ausgezeichnet.

Gegenstand der vorliegenden Erfindung ist auch ein Verfahren zur Herstellung der vorstehend beschriebenen Mischkristallpigmente, dadurch gekennzeichnet, daß man die der Verbindung a) zugrundeliegende 2,5-Dianilinoterephthalsäure der Formel (la) 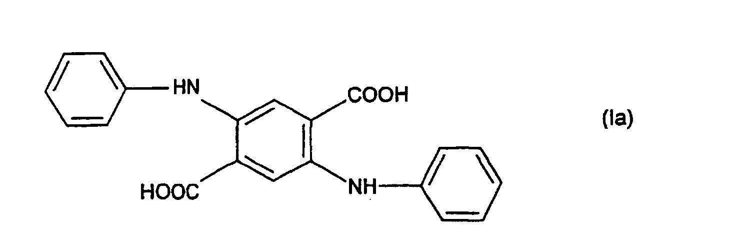 und die der Verbindung b) zugrundeliegende(n) substituierte(n) Terephthalsäure(n) der Formel (Ib) 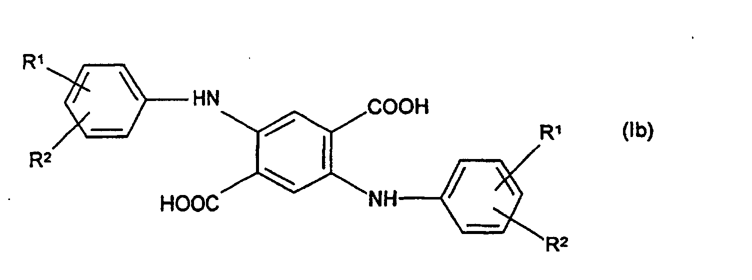 im Verhältnis 82,5: : 17,5 bis 99 1, vorzugsweise 85:15 bis 95:5, insbesondere 87:13 bis 93:7, in Gegenwart von Polyphosphorsäure, einem Polyphosphorsäureester, vorzugsweise Polyphosphorsäuremethylester, oder einer Mischung davon, cyclisiert, das nach der Cyclisierung vorliegende Ringschlußgemisch durch Eindosieren in eine solche Menge an mindestens 70 gew.-%iger, vorzugsweise 75 bis 98 gew.-%iger, insbesondere 80 bis 90 gew.-%iger, wäßriger Orthophosphorsäure bei einer Temperatur von mindestens 110°C hydrolysiert, daß bei Beendigung des Eindosierens eine mindestens 85 gew.-%ige wäßrige Orthophosphorsäure in der hydrolysierten Mischung vorliegt, und anschließend das Mischkristallpigment, gegebenenfalls nach einer Feinverteilung und/oder einer Finishbehandlung, isoliert.

Als Ringschlußmittel wird im allgemeinen die 2,5- bis 10-fache Gewichtsmenge, vorzugsweise die 3- bis 5-fache Gewichtsmenge, Polyphosphorsäure oder Polyphosphorsäureester, bezogen auf die Dianilinoterephthalsäuren, eingesetzt. Der P₂O₅-Gehalt der Polyphosphorsäure oder des -esters liegt zweckmäßigerweise zwischen 80 und 87 Gew.-%, vorzugsweise zwischen 83 und 85 Gew.-%, entsprechend einem Phosphorsäureäquivalent von 110 bis 120 %. Größere Mengen an Ringschlußmittel können verwendet werden, dies ist aber im allgemeinen nicht erforderlich. Die Ringschlußtemperatur beträgt zweckmäßigerweise 80 bis 200°C, vorzugsweise 120 bis 140°C. Die Zeit bis zur vollständigen Cyclisierung beträgt im allgemeinen 0,5 bis 24 Stunden, meist jedoch nur 1 bis 2 Stunden.

Das nach der Cyclisierung vorliegende Ringschlußgemisch wird bei einer Temperatur von mindestens 110°C, vorzugsweise bei 120 bis 180°C, insbesondere bei 130 bis 160°C, hydrolysiert. Dabei wird das Ringschlußgemisch, gegebenenfalls unter Druck, in die Orthophosphorsäure eindosiert, wobei kontinuierlich oder diskontinuierlich verfahren werden kann. Vorteilhafterweise wird kontinuierlich in einem statischen oder mechanischen Mischer gearbeitet. Es ist zweckmäßig, bezogen auf die Polyphosphorsäure, die 0,8- bis 10-fache Menge an Orthophosphorsäure einzusetzen. Im Prinzip ist es auch möglich, eine weniger als 70 gew.-%ige Orthophosphorsäure einzusetzen. Da jedoch die Endkonzentration der Orthophosphorsäure bei Beendigung der Hydrolyse nicht unter 85 Gew.-% liegen darf, um die gewünschte γ-Phase zu erhalten, wäre in diesem Falle die Volumenmenge der einzusetzenden Orthophosphorsäure so gering, daß die Hydrolysemischung eine nicht mehr rührfähige Konsistenz hätte. Vorzugsweise liegt bei Beendigung der Hydrolyse in der Hydrolysemischung eine 87 bis 98 gew.-%ige, insbesondere eine 88 bis 95 gew.-%ige, Orthophosphorsäure vor.

Die Dauer der Hydrolyse ist abhängig von der Dosiergeschwindigkeit. Es ist vorteilhaft, die Dosierung mit einem Konzentrationsgradienten von mindestens 10 % pro Minute, vorzugsweise mindestens 20 % pro Minute, insbesondere 50 % bis 100 % pro Minute, durchzuführen. Unter dem Konzentrationsgradienten (KG) versteht man die relative Zunahme der Orthophosphorsäurekonzentration im Hydrolysegemisch in Prozent pro Zeiteinheit, bezogen auf die jeweilige Anfangs- und Endkonzentration an Orthophosphorsäure. Während der Hydrolyse fällt das gewünschte Mischkristall-Chinacridon in der γ-Phase aus, so daß es nach Beendigung der Hydrolyse zur Erleichterung der Isolierung möglich ist, die phosphorsaure Mischung mit Wasser oder verdünnter Orthophosphorsäure zu verdünnen, ohne die γ-Phase in eine andere Phase umzuwandeln.

Die Nachbehandlung der hydrolysierten Ringschlußgemische mit Wasser oder verdünnter Orthophosphorsäure kann bei erhöhter Temperatur, vorzugsweise bei 120 bis 180 °C, beispielsweise für 0,5 bis 24 Stunden, vorzugsweise 1 bis 5 Stunden, durchgeführt werden. Es ist jedoch auch möglich, nach beendeter Hydrolyse ohne besagte Nachbehandlung das Mischkristall-Pigment, -Präpigment oder -Rohpigment aus dem Hydrolysegemisch zu isolieren.

Je nach Wahl der Dianilinoterephthalsäuren und der angewendeten Hydrolyseund/oder Nachbehandlungsbedingungen, entstehen Suspensionen aus Mischkristallpigmenten, feinteiligen Mischkristallpräpigmenten oder grobkristallinen Mischkristallrohpigmenten, in der mindestens 85 %igen Orthophosphorsäure als flüssiger Phase.

Mischkristallpigmente werden in üblicher Weise durch Filtration direkt isoliert. Vor der Filtration kann die Konzentration der Phosphorsäure durch Zugabe von Wasser oder verdünnter Phosphorsäure herabgesetzt werden, beispielsweise auf unter 70 %.

Mischkristallpräpigmente und Mischkristallrohpigmente müssen noch einer weiteren Nachbehandlung unterzogen werden. Mischkristallpräpigmente werden, gegebenenfalls nach einer Zwischenisolierung, einer thermischen Nachbehandlung (Finishbehandlung) mit oder ohne Zusatz von Lösemitteln bei einer Temperatur von 50 bis 200 °C, gegebenenfalls unter erhöhtem Druck, für 0,5 bis 24 Stunden unterworfen und nach der Abtrennung des Lösemittels isoliert. Die grobkristallinen Mischkristallrohpigmente werden einer mechanischen Feinverteilung unterworfen und anschließend die dabei erhaltenen Mischkristallpigmente in üblicher Weise isoliert oder die erhaltenen Mischkristallpräpigmente werden, gegebenenfalls nach einer Zwischenisolierung, einer Finishbehandlung, wie vorstehend beschrieben, unterworfen und nach der Abtrennung des Lösemittels isoliert.

Die Feinverteilung kann durch Trocken- oder Naßmahlung erfolgen. Bevorzugt wird eine Naßmahlung mit hohem Energieeintrag durchgeführt, weil hierzu das Mischkristallrohpigment nicht getrocknet werden muß, z.B. auf einer Rührwerkskugelmühle mit einer Leistungsdichte von über 1,0 kW pro Liter Mahlraum und einer Rührwerksumfangsgeschwindigkeit von über 12 m/s.

Für die Trockenmahlung eignen sich alle diskontinuierlichen und kontinuierlichen Schwing- oder Rollmühlen und für die Naßmahlung alle diskontinuierlichen und kontinuierlichen Rührwerkskugel-, Roll- und Schwingmühlen sowie Kneter.

Zur Naßmahlung werden die Suspensionen der Mischkristallrohpigmente direkt, oder nach Zwischenisolierung, oder der wasserfeuchte Preßkuchen oder die getrockneten grobkristallinen Mischkristallrohpigmente mit Wasser oder verdünnter Natronlauge bis zu einer mahlfähigen Konsistenz verdünnt. Als Mahlkörper dienen Kugeln aus Zirkonoxid, Zirkonmischoxid, Aluminiumoxid, Stahl oder Quarz vom Durchmesser 0,2 bis 20 mm. Die Dauer der Mahlung beträgt zweckmäßigerweise zwischen 5 und 60 Minuten, bevorzugt zwischen 7,5 und 30 Minuten.

Die nach der Hydrolyse und nach der Feinverteilung vorliegenden Mischkristallpräpigmente können in wäßriger Suspension, gegebenenfalls nach Zugabe von Lösemitteln einer Finishbehandlung unterzogen werden. Die für die Durchführung der Finishbehandlung einzuhaltenden Bedingungen sind in hohem Maße von den angestrebten Eigenschaften der Mischkristallpigmente abhängig und werden jeweils daraufhin ausgerichtet. Normalerweise wird die Suspension der Mischkristallpräpigmente in dem betreffenden Milieu bei einer Temperatur im Bereich zwischen 50 und 200 °C, gegebenenfalls unter erhöhtem Druck, 0,5 bis 24 Stunden lang behandelt. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die gleiche bis zur 5-fachen Gewichtsmenge an Lösemittel, bezogen auf das Gewicht der Mischkristallpräpigmente. Die thermische Behandlung im wäßrigen, wäßrig-organischen oder organischen Medium erfolgt vorzugsweise 1 bis 6 Stunden bei 50 bis 150 °C. Nach beendetem Finish werden die dafür gebrauchten Lösemittel wieder destillativ zurückgewonnen und erneut eingesetzt. Unter Ausnutzung der auf diese Weise zur Verfügung stehenden Variationsmöglichkeiten lassen sich je nach Verwendungszweck die nach dem erfindungsgemäßen Verfahren anfallenden Mischkristallpräpigmente in eine deckendere oder transparentere Form überführen, was über das Lösevermögen des in Betracht gezogenen Lösemittels, dessen Konzentration, die Auswahl der Temperatur und die Dauer der Finishbehandlung gesteuert werden kann.

Zur Verbesserung der coloristischen Eigenschaften und zur Erzielung bestimmter coloristischer Effekte können an einer beliebigen Stelle des Verfahrens Lösemittel, Pigmentdispergatoren, oberflächenaktive Mittel, Entschäumer, Extender oder andere Zusatzstoffe zugesetzt werden. Es können auch Mischungen dieser Zusatzstoffe verwendet werden. Die Zugabe der Zusatzstoffe kann auf einmal oder in mehreren Portionen erfolgen. Die Zugabe kann beispielsweise vor, während oder nach dem Ringschluß, bei der Hydrolyse, der Mahlung oder der Finishbehandlung oder während oder nach der Isolierung vorgenommen werden. Der am besten geeignete Zeitpunkt muß zuvor durch orientierende Versuche ermittelt werden.

Als oberflächenaktive Mittel kommen anionaktive, kationaktive und nichtionogene oberflächenaktive Mittel in Betracht

Als anionaktive oberflächenaktive Mittel kommen beispielsweise Fettsäuretauride, Fettsäure-N-methyltauride, Fettsäureisäthionate, Alkylbenzolsulfonate, Alkylnaphthalinsulfonate, Alkylphenolpolyglykolethersulfate und Fettalkoholpolyglykolethersulfate, Fettsäuren, z.B. Palmitin-, Stearin- und Ölsäure, Seifen, z.B. Alkalisalze von Fettsäuren, Naphthensäuren und Harzsäuren, z.B. Abietinsäure, alkalilösliche Harze, z.B. kolophoniummodifizierte Maleinatharze in Betracht.

Als kationaktive oberflächenaktive Mittel kommen beispielsweise quaternäre Ammoniumsalze, Fettaminoxäthylate, Fettaminpolyglykolether und Fettamine in Betracht.
Als nichtionogene oberflächenaktive Mittel kommen beispielsweise Fettalkoholpolyglykolether, Fettsäurepolyglykolester und Alkylphenolpolyglykolether in Betracht.

Als Pigmentdispergatoren die bei dem Verfahren zur Anwendung kommen, werden Verbindungen mit der allgemeinen Formel (II)

P ― Xₘ (II)

eingesetzt, in der
m eine Zahl zwischen 1 und 4 ist;
P für einen m-wertigen Rest eines linearen Chinacridons der allgemeinen Formel (I) steht, in dem R¹ und R² Wasserstoffatome oder Methylgruppen darstellen,
X eine Gruppe der Formel (III)

-COOM (III)

oder eine Gruppe der Formel (IV)

-SO₃M (IV)

darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺+, Sr²⁺, Ba²⁺, Mn²⁺, Cu²⁺, Ni²⁺, Co²⁺, Zn²⁺, Fe²⁺, Al³⁺, Cr³⁺ oder Fe³⁺; oder ein Ammoniumion mit der Struktur N⁺R³R⁴R⁵R⁶ definiert, wobei die Substituenten R³, R⁴, R⁵ und R⁶ am quartären N-Atom einzeln für sich genommen sowie unabhängig voneinander jeweils als Wasserstoffatome oder C₁-C₃₀-Alkyl-, C₂-C₃₀-Alkenyl- oder C₅-C₃₀-Cycloalkylgruppen, die durch Hydroxy-, Di-(C₁-C₄-alkyl)amino-, Carboxy- oder Carboxamidgruppen, oder durch die Gruppe 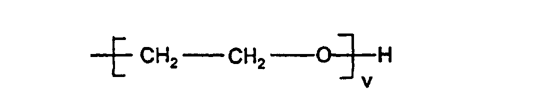 worin v eine Zahl zwischen 2 und 20 ist, oder durch die Gruppe C₂-C₆-Alkyl-N⁺R⁴R⁵R⁶ substituiert sein können, oder
X eine Gruppe der Formel (V) 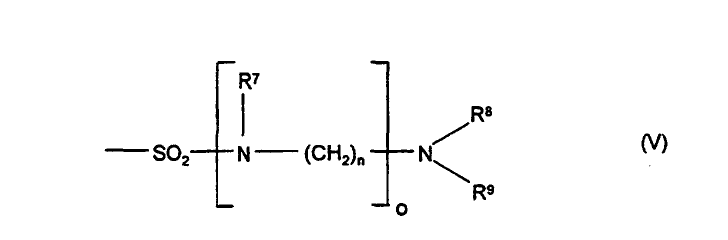 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6, o die Zahl 0 oder 1; oder
X eine Gruppe der Formel (VI) 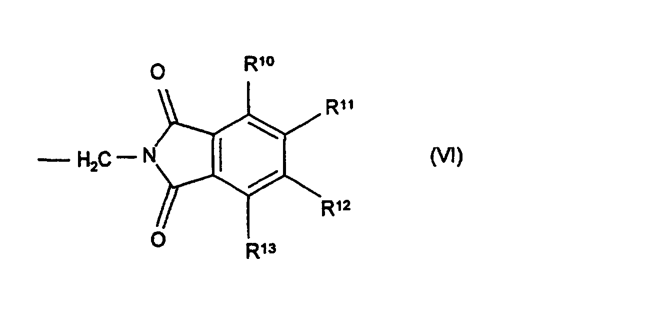 darstellt, wobei R¹⁰, R¹² und R¹³ ein Wasserstoff-, Fluor-, Chlor- oder Bromatom ist, und R¹¹ ein Wasserstoff-, Fluor-, Chlor-, Bromatom ist oder eine Nitro-, C₁-C₅-Alkyl-, C₁-C₆-Alkoxy- oder Benzoylaminogruppe bedeutet.

Bevorzugt sind Pigmentdispergatoren mit der allgemeinen Formel (II), worin P den Rest des unsubstituierten linearen Chinacridons und X die Phthalimidomethylengruppe oder die Sulfonamidgruppe bedeutet.

Pro Gewichtseinheit Mischkristall-Pigment, -Rohpigment oder -Präpigment können 0,1 bis 20 Gew.-%, vorzugsweise 1 bis 10 Gew.-%, der genannten Pigmentdispergatoren und/oder oberflächenaktiven Mittel zugegeben werden.

Als Lösemittel kommen beispielsweise in Frage: Alicyclische Kohlenwasserstoffe wie z.B. Cyclohexan; C₁-C₈-Alkanole, alicyclische Alkohole und mehrwertige Alkohole wie z.B. Methanol, Ethanol, n- oder Isopropanol, n- oder Isobutanol, tert. Butanol, Pentanole, Hexanole, Cyclohexanol, Ethylenglykol, Propylenglykol, Glycerin; C₁-C₅-Dialkyl- oder cyclische Ketone wie z.B. Aceton, Diethylketon, Methylisobutylketon, Methylethylketon oder Cyclohexanon; Ether und Glykolether wie z.B. der Monomethyl- oder Monoethylether des Ethylen- und Propylenglykols, Butylglykol, Ethyldiglykol oder Methoxybutanol; aromatische Kohlenwasserstoffe wie z.B. Toluol, Xylole oder Ethylbenzol, cyclische Ether wie z.B. Tetrahydrofuran, aromatische Chlorkohlenwasserstoffe wie z.B. Chlorbenzol, o-Dichlorbenzol, 1,2,4-Trichlorbenzol oder Brombenzol; substituierte Aromaten wie z.B. Benzoesäure, Nitrobenzol oder Phenol; aliphatische Carbonsäureamide wie z.B. Formamid oder Dimethylformamid; cyclische Carbonsäureamide, wie z.B. N-Methylpyrrolidon; Carbonsäure-C₁-C₄-alkylester, wie z.B. Ameisensäurebutylester, Essigsäureethylester oder Propionsäurepropylester; Carbonsäure-C₁-C₄-glykolester, Phthalsäure- und Benzoesäure-C₁-C₄-alkylester wie z.B. Benzoesäureethylester; heterocyclische Basen wie z.B. Pyridin, Chinolin, Morpholin oder Picolin; sowie Dimethylsulfoxid und Sulfolan.
Bevorzugte Lösemittel sind Alkanole, insbesondere Ethanol, Propanole, Butanole und Pentanole; aliphatische Carbonsäureamide wie Formamid oder Dimethylformamid; cyclische Carbonsäureamide, insbesondere N-Methylpyrrolidon; aromatische Kohlenwasserstoffe wie z.B. Toluol, Xylole oder Ethylbenzol; aromatische Chlorkohlenwasserstoffe wie z.B. Chlorbenzol oder o-Dichlorbenzol.

Die Herstellung von Mischkristallpigmenten nach dem erfindungsgemäßen Verfahren hat sich als besonders wirtschaftlich sowie umweltfreundlich erwiesen, weil die Hydrolyseprodukte direkt als Mischkristallpigmente erhalten werden können. Bei dem beanspruchten Verfahren werden nur geringe Mengen an Chemikalien und Lösemitteln eingesetzt, welche anschließend weiterverarbeitet oder wieder vollständig regeneriert werden können. Somit treten keine Entsorgungsprobleme auf. Die nach der vorliegenden Erfindung erhältlichen Mischkristallpigmente zeichnen sich aus durch ihre hervorragenden coloristischen und rheologischen Eigenschaften, sowie leichte Dispergierbarkeit, gutes Glanzverhalten und hohe Farbstärke. Es können auch hochtransparente Mischkristallpigmente hergestellt werden, die besonders für den Einsatz in Metalliclacken geeignet sind.

Die erfindungsgemäß hergestellten Mischkristallpigmente lassen sich zum Pigmentieren von hochmolekularen organischen Materialien natürlicher oder synthetischer Herkunft einsetzen, wie z.B. Kunststoffe, Harze, Lacke oder Druckfarben.

Hochmolekulare organische Materialien, die mit den genannten Pigmenten pigmentiert werden können, sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z.B. Aminoplaste, insbesondere Harnstoff- und Melaminformaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäßen Pigmente in einer Menge von vorzugsweise 0,1 bis 10 % ein.

Die erfindungsgemäßen Mischkristallpigmente sind geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Latextoner, Polymerisationstoner sowie Spezialtoner. Typische Tonderbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Desweiteren sind die erfindungsgemäßen Mischkristallpigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäßen Mischkristallpigmente als Farbmittel in Ink-Jet Tinten auf wäßriger und nichtwäßriger Basis sowie in solchen Tinten, die nach dem hot-melt-Verfahren arbeiten, geeignet.

Außerdem sind die erfindungsgemäßen Mischkristallpigmente auch geeignet als Farbmittel für Farbfilter, sowohl für die additive wie für die subtraktive Farberzeugung.

Zur Beurteilung der Eigenschaften der nach der Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes sowie ein wäßriger Lack auf Polyurethanbasis (PUR) ausgewählt.

Zur Beurteilung der Eigenschaften der nach der Erfindung erzeugten Pigmente auf dem Kunststoffsektor wurde aus der Vielzahl der bekannten Kunststoffe Weichpolyvinylchlorid (PVC) ausgewählt.

Die Bestimmung der Farbstärke und des Farbtons erfolgte nach DIN 55986.
Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Kristallphase der Mischkristallrohpigmente, Mischkristallpräpigmente und Mischkristallpigmente erfolgte durch Röntgenspektroskopie. Die Röntgenbeugungsspektren sind in digitaler Form wiedergegeben. Die relativen Intensitäten von kräftigen Linien betragen 51-100 %, von mittleren Linien 11-50 % und von schwachen Linien 2-10 %.

Im vorangehenden Text und in den nachfolgenden Beispielen beziehen sich Teile jeweils auf Gewichtsteile und Prozente jeweils auf Gewichtsprozente der so beschriebenen Substanzen. "KG" bedeutet Konzentrationsgradient.

### Beispiel 1

In ein Rührgefäß werden 450 Teile Polyphosphorsäure, die 85,0 % P₂O₅ enthält, eindosiert. Danach werden 135 Teile 2,5-Dianilinoterephthalsäure und 15 Teile 2,5-Di-(3-chloranilino)-terephthalsäure unter Rühren bei 125°C eingetragen und 1 Stunde auf 125°C erhitzt, wobei der Ringschluß zum Chinacridon erfolgt. Anschließend wird das Reaktionsgemisch unter Rühren in 2 Minuten (KG: 50 %/min) in 1607,5 Teile Phosphorsäure 80 %ig von 135°C eindosiert und dabei hydrolysiert. Dabei steigt die Temperatur auf 150 °C an. Nach der Hydrolyse liegt 87,5 %ige Phosphorsäure vor. Dann werden 1209,2 Teile Phosphorsäure 40 %ig zugetropft, wobei die Suspension auf 120°C abgekühlt wird. Danach liegt 70 %ige Phosphorsäure vor. Es wird 1 Stunde bei 120 °C gerührt. Anschließend wird das Mischkristallpigment bei 110°C abgesaugt, mit 70 %iger Phosphorsäure bis zum farblosen Ablauf gewaschen, mit Wasser neutral gewaschen und bei 80°C getrocknet. Man erhält 133,4 Teile Mischkristallpigment (Pigment Violet 19, γII-Phase). Das Röntgenspektrum zeigt drei kräftige Linien beim doppelten Glanzwinkel 2 θ bei 6,3°, 13,5°und 26,4°, drei mittlere Linien bei 16,1°, 16,5° und 24,0° und eine schwache Linie bei 20,8°. Im AM-Lack werden transparente, farbtontiefe, reine und farbstarke Lackierungen erhalten. Die Rheologie wird mit 3 bewertet und die Viskosität beträgt 4,2 s. Die Glanzmessung ergibt den Wert 56.

### Vergleichsbeispiel 1

Wird das obige Beispiel wiederholt, werden aber an Stelle der Mischung aus 135 Teilen 2,5-Dianilinoterephthalsäure und 15 Teilen 2,5-Di-(3-chloranilino)-terephthalsäure ausschließlich 150 Teile 2,5-Dianiloterephthalsäure eingesetzt, so erhält man Chinacridon, das in der β-Phase vorliegt.

### Beispiel 2

19 Teile Mischkristallpigment aus Beispiel 1 werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.

Man erhält eine Pigmentzubereitung. Im AM-Lack werden transparente, farbtontiefe, reine und farbstarke Lackierungen erhalten. Die Rheologie wird mit 4-5 bewertet und die Viskosität beträgt 4,2 s. Die Glanzmessung ergibt den Wert 72.

### Beispiel 3

In ein Rührgefäß werden 450 Teile Polyphosphorsäure, die 85,0 % P₂O₅ enthält, eindosiert. Danach werden 135 Teile 2,5-Dianilinoterephthalsäure und 15 Teile 2,5-Di-(3-chloranilino)-terephthalsäure unter Rühren bei 125°C eingetragen und 1 Stunde auf 125°C erhitzt, wobei der Ringschluß zum Chinacridon erfolgt. Anschließend wird das Reaktionsgemisch unter Rühren in 2 Minuten (KG: 50 %/min) in 2187,9 Teile Phosphorsäure 85 %ig von 140 °C eindosiert und dabei hydrolysiert. Dabei steigt die Temperatur auf 155 °C an. Nach der Hydrolyse liegt 90 %ige Phosphorsäure vor. Dann werden 1768,9 Teile Phosphorsäure 40 %ig zugetropft, wobei die Suspension auf 120°C abgekühlt wird. Danach liegt 70 %ige Phosphorsäure vor. Es wird 1 Stunde bei 120 °C gerührt. Anschließend wird das Mischkristallpigment bei 110°C abgesaugt, mit 70 %iger Phosphorsäure bis zum farblosen Ablauf gewaschen, mit Wasser neutral gewaschen und bei 80°C getrocknet. Man erhält 132,8 Teile Mischkristallpigment (Pigment Violet 19, γII-Phase). Das Röntgenspektrum zeigt drei kräftige Linien beim doppelten Glanzwinkel 2 θ bei 6,3°, 13,5° und 26,4°, vier mittlere Linien bei 16,6°, 20,6°, 24,0° und 28,3° und eine schwache Linie bei 30,3°. Im AM-Lack werden transparente, farbtontiefe, reine und farbstarke Lackierungen erhalten. Die Rheologie wird mit 3-4 bewertet und die Viskosität beträgt 4,5 s. Die Glanzmessung ergibt den Wert 60.

### Beispiel 4

19 Teile Mischkristallpigment aus Beispiel 3 werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist.
Man erhält eine Pigmentzubereitung. Im AM-Lack werden transparente, farbtontiefe, reine und farbstarke Lackierungen erhalten. Die Rheologie wird mit 5 bewertet und die Viskosität beträgt 4,8 s. Die Glanzmessung ergibt den Wert 81.

### Beispiel 5

In ein Rührgefäß werden 450 Teile Polyphosphorsäure, die 85,0 % P₂O₅ enthält, eindosiert. Danach werden 127,5 Teile 2,5-Dianilinoterephthalsäure und 22,5 Teile 2,5-Di-(3-chloranilino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 574 Teile Phosphorsäure 80 %ig von 140 °C eindosiert und dabei hydrolysiert. Dabei steigt die Temperatur auf 160 °C an. Nach der Hydrolyse liegt 95 %ige Phosphorsäure vor. Es wird auf 150 °C abkühlen lassen und 4 Stunden bei 150°C gerührt. Dann werden 1428,8 Teile Wasser zugetropft, wobei die Suspension auf 90 °C abkühlt. Es wird 1 Stunde bei 90 °C gerührt. Danach liegt 40 %ige Phosphorsäure vor. Anschließend wird das Pigment abgesaugt, mit Wasser neutral gewaschen und bei 80 °C getrocknet. Man erhält 134 Teile Mischkristallpigment (Pigment Violet 19, γIV-Phase). Das Röntgenspektrum zeigt drei kräftige Linien beim doppelten Glanzwinkel 2θ bei 6,4°, 13,5° und 26,5°, acht mittlere Linien bei 10,6°, 13,2°, 16,1°, 16,8°, 20,5°, 21,4 °, 24,0° und 28,3° und eine schwache Linien bei 30,1°. Linien von 3,10-Dichlorchinacridon sind nicht nachweisbar.

19 Teile Mischkristallpigment werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, reine und farbstarke Lackierungen erhalten. Die Rheologie wird mit 5 bewertet und die Viskosität beträgt 3,4 s. Die Glanzmessung ergibt den Wert 80.

### Beispiel 6

In ein Rührgefäß werden 450 Teile Polyphosphorsäure, die 85,0 % P₂O₅ enthält, eindosiert. Danach werden 127,5 Teile 2,5-Dianilinoterephthalsäure und 22,5 Teile 2,5-Di-(3-chloranilino)-terephthalsäure unter Rühren bei 125 °C eingetragen und 1 Stunde auf 125 °C erhitzt, wobei der Ringschluß zum Chinacridon erfolgt Anschließend wird das Reaktionsgemisch unter Rühren in 3 Minuten (KG: 33,3 %/min) in 860,8 Teile Phosphorsäure 85 %ig von 140 °C eindosiert und dabei hydrolysiert. Dabei steigt die Temperatur auf 160 °C an. Nach der Hydrolyse liegt 95 %ige Phosphorsäure vor. Dann werden 294,5 Teile Phosphorsäure 40 %ig zugetropft, wobei die Suspension auf 150 °C abgekühlt wird. Danach liegt 85 %ige Phosphorsäure vor. Es wird 5 Stunden bei 150 °C gerührt. Dann wird auf 120 °C abgekühlt und 1822,3 Teile Wasser zugetropft. Danach liegt 40 %ige Phosphorsäure vor. Anschließend wird das Mischkristallpigment abgesaugt, mit 40 %iger Phosphorsäure bis zum farblosen Ablauf gewaschen, danach mit Wasser neutral gewaschen und bei 80 °C getrocknet. Man erhält 130,5 Teile Mischkristallpigment (Pigment Violet 19, γIV-Phase). Das Röntgenspektrum zeigt drei kräftige Linien beim doppelten Glanzwinkel 2 θ bei 6,4°, 13,5° und 26,4° und fünf mittlere Linien bei 17,0 °, 20,5 °, 21,4 °, 23,9 ° und 28,2 °.

9,5 Teile Mischkristallpigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, farbtontiefe, reine und farbstarke Lackierungen erhalten. Der Farbton ist nach der blaueren Seite verschoben. Die Rheologie wird mit 5 bewertet und die Viskosität beträgt 3,2 s. Die Glanzmessung ergibt den Wert 83.

### Beispiel 7

In ein Rührgefäß werden 450 Teile Polyphosphorsäure, die 85,0 % P₂O₅ enthält, eindosiert. Danach werden 127,5 Teile 2,5-Dianilinoterephthalsäure und 22,5 Teile 2,5-Di-(3-chloranilino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 860,8 Teile Phosphorsäure 85 %ig von 140 °C eindosiert und dabei hydrolysiert. Dabei steigt die Temperatur auf 160 °C an. Nach der Hydrolyse liegt 95 %ige Phosphorsäure vor. Dann werden 1105 Teile Phosphorsäure 40 %ig zugetropft, wobei die Suspension auf 120 °C abgekühlt wird. Danach liegt 70 %ige Phosphorsäure vor. Es wird 3 Stunden bei 120 °C gerührt. Anschließend wird auf 110 °C abgekühlt, das Mischkristallpigment abgesaugt, mit 70 %iger Phosphorsäure bis zum farblosen Ablauf gewaschen, danach mit Wasser neutral gewaschen und bei 80 °C getrocknet. Man erhält 131 Teile Mischkristallpigment (Pigment Violet 19, γIV-Phase). Das Röntgenspektrum zeigt drei kräftige Linien beim doppelten Glanzwinkel 2 θ bei 6,4°, 13,5° und 26,4°, fünf mittlere Linien bei 13,3 °, 16,9 °, 20,5 °, 24,0 ° und 28,3 ° und eine schwache Linie bei 30,1°.

9,5 Teile Mischkristallpigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, reine und farbstarke Lackierungen erhalten. Die Rheologie wird mit 5 bewertet und die Viskosität beträgt 3,6 s. Die Glanzmessung ergibt den Wert 85.

### Beispiel 8

In ein Rührgefäß werden 450 Teile Polyphosphorsäure, die 85,0 % P₂O₅ enthält, eindosiert. Danach werden 127,5 Teile 2,5-Dianilinoterephthalsäure und 22,5 Teile 2,5-Di-(3-chloranilino)-terephthalsäure unter Rühren bei 125°C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 860,8 Teile Phosphorsäure 85 %ig von 140 °C eindosiert und dabei hydrolysiert. Dabei steigt die Temperatur auf 160 °C an. Nach der Hydrolyse liegt 95 %ige Phosphorsäure vor. Dann werden 294,5 Teile Phosphorsäure 40 %ig zugetropft, wobei die Suspension auf 150 °C abgekühlt wird. Danach liegt 85 %ige Phosphorsäure vor. Es wird 3 Stunden bei 150 °C gerührt. Anschließend wird auf 140 °C abgekühlt, das Mischkristallpigment abgesaugt, mit 85 %iger Phosphorsäure bis zum farblosen Ablauf gewaschen, danach mit Wasser neutral gewaschen und bei 80 °C getrocknet. Man erhält 126,4 Teile Mischkristallpigment (Pigment Violet 19, γIV-Phase). Das Röntgenspektrum zeigt drei kräftige Linien beim doppelten Glanzwinkel 2 θ bei 6,4°, 13,5° und 26,5°, sieben mittlere Linien bei 5,4 °, 13,0 °, 16,6 °, 20,7 °, 24,0 °, 25,5 ° und 28,4° und eine schwache Linie bei 30,4°.

9,5 Teile Mischkristallpigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, reine und farbstarke Lackierungen erhalten. Die Rheologie wird mit 5 bewertet und die Viskosität beträgt 3,3 s. Die Glanzmessung ergibt den Wert 82.

### Beispiel 9

In ein Rührgefäß werden 450 Teile Polyphosphorsäure, die 85,0 % P₂O₅ enthält, eindosiert. Danach werden 142,5 Teile 2,5-Dianilinoterephthalsäure und 7,5 Teile 2,5-Di-(3-chloranilino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 860,8 Teile Phosphorsäure 85 %ig von 140 °C eindosiert und dabei hydrolysiert. Dabei steigt die Temperatur auf 160 °C an. Nach der Hydrolyse liegt 95 %ige Phosphorsäure vor. Dann werden 1105 Teile Phosphorsäure 40 %ig zugetropft, wobei die Suspension auf 120 °C abgekühlt wird. Danach liegt 70 %ige Phosphorsäure vor. Es wird 4 Stunden bei 120 °C gerührt. Anschließend wird auf 110 °C abgekühlt, das Mischkristallpigment abgesaugt, mit 70 %iger Phosphorsäure bis zum farblosen Ablauf gewaschen, danach mit Wasser neutral gewaschen und bei 80 °C getrocknet. Man erhält 127,1 Teile Mischkristallrohpigment (Pigment Violet 19, γIV-Phase). Das Röntgenspektrum zeigt vier kräftige Linien beim doppelten Glanzwinkel 2 θ bei 6,5°, 13,5°, 13,7° und 26,4°, fünf mittlere Linien bei 13,0 °, 16,9 °, 23,8 °, 25,2 ° und 28,2 ° und vier schwache Linien bei 20,5 °, 21,4 °, 30,4 ° und 31,7°.

In eine Rührwerkskugelmühle (Hersteller: Draiswerke GmbH, Mannheim), die mit 400 Teilen Zirkonmischoxidperlen vom Durchmesser 0,3-0,4 mm als Mahlkörper gefüllt ist, wird eine Suspension bestehend aus 90 Teilen Isobutanol 5%ig und 10 Teilen Mischkristallrohpigment (Pigment Violet 19, γIV-Phase) eindosiert. Es wird mit einer Rührwerksumfangsgeschwindigkeit von 15,6 m/s sowie einer spezifischen Leistungsdichte von 3,1 kW pro Liter Mahlraum 20 Minuten lang bei 20°C gemahlen. Anschließend wird die Mahlgutsuspension von den Mahlkörpem abgesiebt, die Mahlkörper werden mit Wasser abgespült und die Mahlgutsuspensionen vereinigt. Es wird zum Sieden erhitzt und das Isobutanol bis 100°C am Übergang abdestilliert. Nach dem Abkühlen auf 60°C wird das Mischkristallpigment abgesaugt, mit Wasser gewaschen und bei 80°C getrocknet. Man erhält 18,6 Teile Mischkrstallpigment (Pigment Violet 19, γII-Phase, mit geringen Mengen α-Phase). Im PE-Lack werden transparente und farbstarke Lackierungen erhalten. Die Metalliclackierung ist farbstark und hat einen dunklen Flop.

### Beispiel 10

In eine Rührwerkskugelmühle (Hersteller: Draiswerke GmbH, Mannheim), die mit 400 Teilen Zirkonmischoxidperlen vom Durchmesser 0,3-0,4 mm als Mahlkörper gefüllt ist, wird eine Suspension bestehend aus 90 Teilen Wasser 10 Teilen Mischkristallrohpigment aus Beispiel 9 eindosiert. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpem abgesiebt, die Mahlkörper werden mit Wasser abgespült und die vereinigten Mahlgutsuspensionen abgesaugt. Man erhält 28,4 Teile Preßkuchen 35,2 %ig.

Zur Finishoperation wird der Preßkuchen in 81,6 Teile Wasser eingetragen. Danach werden 50 Teile Isobutanol 100 %ig und 0,5 Teile Pigmentdispergator der Formel (II) hinzugefügt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Es wird zum Sieden erhitzt, 3 Stunden bei Siedetemperatur gerührt und anschließend das Isobutanol bis 100°C am Übergang abdestilliert. Nach dem Abkühlen auf 60 °C wird die Pigmentzubereitung abgesaugt, mit Wasser gewaschen und bei 80°C getrocknet. Man erhält 9,9 Teile Pigmentzubereitung. Im AM-Lack werden transparente, farbtief und farbstarke Lackierungen erhalten. Die Rheologie wird mit 5 bewertet und die Viskosität beträgt 4,6 s. Die Glanzmessung ergibt den Wert 60.

### Beispiel 11

In eine Rührwerkskugelmühle (Hersteller: Draiswerke GmbH, Mannheim), die mit 400 Teilen Zirkonmischoxidperlen vom Durchmesser 0,3-0,4 mm als Mahlkörper gefüllt ist, wird eine Suspension bestehend aus 90 Teilen Wasser und 10 Teilen Mischkristall-Rohpigment aus Beispiel 9 eindosiert. Es wird mit einer Rührwerksumfangsgeschwindigkeit von 15,6 m/s sowie einer spezifischen Leistungsdichte von 3,1 kW pro Liter Mahlraum 20 Minuten lang bei 20 °C gemahlen. Anschließend wird die Mahlgutsuspension von den Mahlkörpern abgesiebt, die Mahlkörper werden mit Wasser abgespült und die vereinigten Mahlgutsuspensionen abgesaugt. Der Preßkuchen wird in ein Rührgefäß eingefüllt. Danach werden 100 Teile Wasser und 0,25 Teile einer 50 %igen wäßrigen Alkylphenolpolyglykolethersulfatlösung zugegeben. Es wird auf 60°C geheizt und 2 Stunden bei 60°C gerührt. Danach wird durch Zugabe von 0,5 Teilen Salzsäure 10 %ig pH 2 eingestellt, 1 Stunde bei 60°C gerührt, das oberflächenbehandelte Pigment abgesaugt, mit Wasser neutral gewaschen und bei 80 °C getrocknet. Man erhält 9,1 Teile oberflächenbehandeltes Mischkristallpigment (Pigment Violet 19, γII-Phase, mit geringen Mengen α-Phase). Im PUR-Lack werden sehr transparente, reine und farbstarke Lackierungen erhalten.

### Beispiel 12

In einem Porzellanbehälter, der mit 1200 Teilen Quarzitperlen vom Durchmesser 2 bis 3 mm als Mahlkörper zu 90 Vol.-% gefüllt ist, werden 200 Volumenteile Aceton und 20,0 Teile Mischkristall-Rohpigment aus Beispiel 9 eindosiert. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird das Mahlgut von den Mahlkörpem abgesiebt. Die Mahlkörper werden mit Aceton abgespült und die vereinigten Mahlgutsuspensionen zur Trockene eingedampft. Man erhält 19,2 Teile Mischkristallpigment (γIV-Phase). In PVC werden farbstarke Färbungen erhalten. Die Ausblutechtheit ist einwandfrei.

### Beispiel 13

In ein Rührgefäß werden 450 Teile Polyphosphorsäure, die 85,0 % P₂O₅ enthält, eindosiert. Danach werden 135 Teile 2,5-Dianilinoterephthalsäure und 15 Teile 2,5-Di-(4-toluidino)-terephthalsäure unter Rühren bei 125 °C eingetragen und 1 Stunde auf 125°C erhitzt, wobei der Ringschluß zum Chinacridon erfolgt. Anschließend wird das Reaktionsgemisch unter Rühren in 2 Minuten (KG: 50 %/min) in 1607,5 Teile Phosphorsäure 80 %ig von 135 °C eindosiert und dabei hydrolysiert. Dabei steigt die Temperatur auf 150 °C an. Nach der Hydrolyse liegt 87,5 %ige Phosphorsäure vor. Dann werden 1209,2 Teile Phosphorsäure 40 %ig zugetropft, wobei die Suspension auf 120 °C abgekühlt wird. Danach liegt 70 %ige Phosphorsäure vor. Es wird 3 Stunden bei 120 °C gerührt. Anschließend wird das Michkristallpigment bei 110 °C abgesaugt, mit 70 %iger Phosphorsäure bis zum farblosen Ablauf gewaschen, mit Wasser neutral gewaschen und bei 80 °C getrocknet. Man erhält 133,4 Teile Mischkristallpigment (Pigment Violet 19, γIV-Phase). Das Röntgenspektrum zeigt drei kräftige Linien beim doppelten Glanzwinkel 2 θ bei 6,3°, 13,6° und 26,3°, fünf mittlere Linien bei 12,8 °, 16,3 °, 20,6 °, 23,8 ° und 28,1 ° und zwei schwache Linien bei 21,4 ° und 31,2 °. Linien von 2,9-Dimethylchinacridon sind nicht nachweisbar.

19 Teile Mischkristallpigment werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, farbtontiefe, reine und farbstarke Lackierungen erhalten. Der Farbton ist nach der blaueren Seite verschoben. Die Rheologie wird mit 5 bewertet und die Viskosität beträgt 4,6 s. Die Glanzmessung ergibt den Wert 85. Im PE-Lack werden farbstarke Metalliclackierungen erhalten.

### Beispiel 14

In ein Rührgefäß werden 450 Teile Polyphosphorsäure, die 85,0 % P₂O₅ enthält, eindosiert. Danach werden 135 Teile 2,5-Dianilinoterephthalsäure und 15 Teile 2,5-Di-(3-chloranilino)-terephthalsäure unter Rühren bei 125°C eingetragen und 1 Stunde auf 125°C erhitzt, wobei der Ringschluß zum Chinacridon erfolgt. Anschließend wird das Reaktionsgemisch unter Rühren in 2 Minuten (KG: 50 %/min) in eine Mischung aus 1607,5 Teile Phosphorsäure 80 %ig und 50 g Cumol von 115 °C eindosiert und dabei hydrolysiert. Dabei steigt die Temperatur auf 135 °C an. Nach der Hydrolyse liegt 87,5 %ige Phosphorsäure vor. Dann werden 1209,2 Teile Phosphorsäure 40 %ig zugetropft, wobei die Suspension auf 110 °C abgekühlt wird. Danach liegt 70 %ige Phosphorsäure vor. Anschließend wird das Cumol abdestilliert. Bei 100 °C wird das Mischkristallpigment abgesaugt, mit 70 %iger Phosphorsäure bis zum farblosen Ablauf gewaschen, mit Wasser neutral gewaschen und bei 80 °C getrocknet. Man erhält 125,1 Teile Mischkristallpigment (Pigment Violet 19, γII-Phase).

9,5 Teile Mischkristallpigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 o die Zahl 1,0 und m die Zahl 2,0 ist Man erhält eine Pigmentzubereitung. Im AM-Lack werden transparente, farbtontiefe, reine und farbstarke Lackierungen erhalten. Die Rheologie wird mit 5 bewertet und die Viskosität beträgt 5,2 s. Die Glanzmessung ergibt den Wert 74.

### Beispiel 15

In ein Rührgefäß werden 450 Teile Polyphosphorsäure, die 85,0 % P₂O₅ enthält, eindosiert. Danach werden 135 Teile 2,5-Dianilinoterephthalsäure, 11,25 Teile 2,5-Di-(3-chloranilino)-terephthalsäure und 3,75 Teile 2,5-Di-(4-toluidino)-terephthalsäure unter Rühren bei 125°C eingetragen und 1 Stunde auf 125°C erhitzt, wobei der Ringschluß zum Chinacridon erfolgt. Anschließend wird das Reaktionsgemisch unter Rühren in 2 Minuten (KG: 50 %/min) in 1607,5 Teile Phosphorsäure 80 %ig von 135°C eindosiert und dabei hydrolysiert. Dabei steigt die Temperatur auf 150 °C an. Nach der Hydrolyse liegt 87,5 %ige Phosphorsäure vor. Dann werden 1209,2 Teile Phosphorsäure 40 %ig zugetropft, wobei die Suspension auf 120°C abgekühlt wird. Danach liegt 70 %ige Phosphorsäure vor. Es wird 1 Stunde bei 120°C gerührt. Anschließend wird das Mischkristallpigment bei 110 °C abgesaugt, mit 70 %iger Phosphorsäure bis zum farblosen Ablauf gewaschen, mit Wasser neutral gewaschen und bei 80 °C getrocknet. Man erhält 131,9 Teile Mischkristallpigment (Pigment Violet 19, γIV-Phase). Im AM-Lack werden transparente, farbtontiefe und farbstarke Lackierungen erhalten. Die Rheologie wird mit 3 bewertet und die Viskosität beträgt 4,2 s. Die Glanzmessung ergibt den Wert 58.

### Beispiel 16

In ein Rührgefäß werden 450 Teile Polyphosphorsäure, die 85,0 % P₂O₅ enthält, eindosiert. Danach werden 135 Teile 2,5-Dianilinoterephthalsäure und 15 Teile 2,5-Di-(3-methoxy-4-methyl-anilino)-terephthalsäure unter Rühren bei 125°C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 1607,5 Teile Phosphorsäure 80 %ig von 135 °C eindosiert und hydrolysiert. Dabei steigt die Temperatur auf 150 °C an. Nach der Hydrolyse liegt 87,5 %ige Phosphorsäure vor. Dann werden 1209,2 Teile Phosphorsäure 40 %ig zugetropft, wobei die Suspension auf 120°C abgekühlt wird. Danach liegt 70 %ige Phosphorsäure vor. Es wird 1 Stunde bei 120°C gerührt. Anschließend wird das Mischkristallpigment bei 110°C abgesaugt, mit 70 %iger Phosphorsäure bis zum farblosen Ablauf gewaschen, mit Wasser neutral gewaschen und bei 80 °C getrocknet. Man erhält 132,5 Teile Mischkristallpigment (Pigment Violet 19, γII-Phase, mit geringen Mengen γIV-Phase). Im AM-Lack werden transparente, farbtontiefe und farbstarke Lackierungen erhalten. Die Rheologie wird mit 3 bewertet und die Viskosität beträgt 4,2 s. Die Glanzmessung ergibt den Wert 49.

### Beispiel 17

In ein Rührgefäß werden 540 Teile Polyphosphorsäure, die 85,0 % P₂O₅ enthält, eindosiert. Danach werden 81 Teile 2,5-Dianilinoterephthalsäure und 9 Teile 2,5-Di-(2-chloranilino)-terephthalsäure unter Rühren bei 125 °C eingetragen und 1 Stunde auf 125 °C erhitzt, wobei der Ringschluß zum Chinacridon erfolgt. Anschließend wird das Reaktionsgemisch unter Rühren in 2 Minuten (KG: 50 %/min) in 1929 Teile Phosphorsäure 80 %ig von 135 °C eindosiert und hydrolysiert. Dabei steigt die Temperatur auf 150°C an. Nach der Hydrolyse liegt 87,5 %ige Phosphorsäure vor. Dann werden 1451 Teile Phosphorsäure 40 %ig zugetropft, wobei die Suspension auf 120 °C abgekühlt wird. Danach liegt 70 %ige Phosphorsäure vor. Es wird 1 Stunde bei 120°C gerührt. Anschließend wird das Mischkristallpigment bei 110°C abgesaugt, mit 70 %iger Phosphorsäure bis zum farblosen Ablauf gewaschen, mit Wasser neutral gewaschen und bei 80 °C getrocknet. Man erhält 80,4 Teile Mischkristallpigment (Pigment Violet 19, γII-Phase).

19 Teile Mischkristallpigment werden mit 1 Teil Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung.

Im AM-Lack werden deckende, farbtontiefe und farbstarke Lackierungen erhalten. Die Rheologie wird mit 5 bewertet und die Viskosität beträgt 3,9 s. Die Glanzmessung ergibt den Wert 75.

### Beispiel 18

In ein Rührgefäß werden 1000 Teile Polyphosphorsäure, die 83,0 % P₂O₅ enthält, eindosiert. Danach werden 180 Teile 2,5-Dianilino-terephthalsäure und 20 Teile 2,5-Di-(3-chloranilino)-terephthalsäure unter Rühren bei 90°C in 70 Minuten eingetragen. Dabei steigt die Temperatur auf 111°C an. Es wird auf 125°C erhitzt und 3 Stunden bei 125°C gerührt, wobei der Ringschluß zum Chinacridon erfolgt. Anschließend wird das Reaktionsgemisch in einem Zahnscheibendispergierer Typ IKA SD 41 (Lieferant: Janke u. Kunkel, Staufen) bei 13000 Upm und 3 mm Statorschlitzweite, mit einem Volumenstrom von 1,92 Volumenteilen pro Stunde in einen Volumenstrom von 53,4 Volumenteilen pro Stunde 85 %iger Phosphorsäure von 140°C eindosiert und in 1,2 Sekunden unter Bildung eines Niederschlags hydrolysiert. Nach der Hydrolyse liegt 89,9 %ige Phosphorsäure vor. Man erhält 7017 Teile Rohpigmentsuspension. 6848 Teile Rohpigmentsuspension werden auf 120°C abgekühlt und unter Rühren 4479 Teile Phosphorsäure 40 %ig von 25°C zulaufen gelassen. Nach der Phosphorsäurezugabe liegt 70 %ige Phosphorsäure vor. Es wird 3 Stunden bei 120 °C gerührt. Anschließend wird das Mischkristallrohpigment mit 10000 Teilen Wasser verdünnt, abgesaugt, mit Wasser neutral gewaschen und bei 80°C getrocknet. Man erhält 96,6 Teile Mischkristallrohpigment.

In einem Porzellanbehälter, der mit 1200 Teilen Quarzitperlen vom Durchmesser 2 bis 3 mm als Mahlkörper zu 90 Vol.-% gefüllt ist, werden 200 Volumenteile Dimethylformamid und 20,0 Teile Mischkristallrohpigment eindosiert. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird die Mahlgutsuspension von den Mahlkörpern abgesiebt und die Mahlkörper mit Dimethylformamid abgespült. Die vereinigten Mahlgutsuspensionen werden 2 Stunden zum Sieden erhitzt, dann auf 1000 Teile Wasser gegeben, das Mischkristallpigment abgesaugt, mit Wasser dimethylformamidfrei gewaschen und bei 80°C getrocknet. Man erhält 19,2 Teile Mischkristallpigment (Pigment Violet 19, γII-Phase).

9,5 Teile Mischkristallpigment werden mit 0,5 Teilen Pigmentdispergator der Formel (II) mechanisch gemischt In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0 , o die Zahl 1,0 und m die Zahl 2,0 ist. Man erhält eine Pigmentzubereitung. Im AM-Lack werden transparente, farbtontiefe und farbstarke Lackierungen erhalten.

### Beispiel 19

In ein Rührgefäß werden 1000 Teile Polyphosphorsäure, die 83,0 % P₂O₅ enthält, eindosiert. Danach werden 180 Teile 2,5-Dianilino-terephthalsäure und 20 Teile 2,5-Di-(3-chloranilino)-terephthalsäure unter Rühren bei 90°C in 60 Minuten eingetragen.

Dabei steigt die Temperatur auf 115 °C an. Es wird auf 125°C erhitzt und 1 Stunde bei 125°C gerührt, wobei der Ringschluß zum Chinacridon erfolgt. Anschließend wird das Reaktionsgemisch in einem Statischen Mischer Typ ®Kenics KMR (Länge 10 cm, Durchmesser 9 mm, 8 Elemente, Lieferant: H. Ott, Neckargmünd) mit einem Volumenstrom von 2,1 Volumenteilen pro Stunde in einen Volumenstrom von 44,5 Volumenteilen pro Stunde 85 %iger Phosphorsäure von 140 °C eindosiert und in 0,34 Sekunden unter Bildung eines Niederschlags hydrolysiert. Nach der Hydrolyse liegt 93 %ige Phosphorsäure vor. Man erhält 6445 Teile Rohpigmentsuspension. 6279 Teile Rohpigmentsuspension werden auf 120°C abgekühlt und unter Rühren 4479 Teile Phosphorsäure 40 %ig von 25 °C zulaufen gelassen. Nach der Phosphorsäurezugabe liegt 70 %ige Phosphorsäure vor. Es wird 3 Stunden bei 120 °C gerührt. Anschließend wird das Mischkristallrohpigment mit 10000 Teilen Wasser verdünnt, abgesaugt, mit Wasser neutral gewaschen und bei 80°C getrocknet. Man erhält 102,6 Teile Mischkristallrohpigment.

In einem Porzellanbehälter, der mit 1200 Teilen Quarzitperlen vom Durchmesser 2 bis 3 mm als Mahlkörper zu 90 Vol.-% gefüllt ist, werden 200 Volumenteile Dimethylformamid und 20,0 Teile Mischkristallrohpigment eindosiert. Es wird 8 Stunden lang unter Schütteln auf einer Schwingmühle (Typ Vibratom; Hersteller: Siebtechnik Mühlheim) bei 1400 Umdrehungen pro Minute, Schwingkreis 4 mm, fein vermahlen. Anschließend wird die Mahlgutsuspension von den Mahlkörpem abgesiebt und die Mahlkörper mit Dimethylformamid abgespült. Die vereinigten Mahlgutsuspensionen werden 2 Stunden zum Sieden erhitzt, dann auf 1000 Teile Wasser gegeben, das Mischkristallpigment abgesaugt, mit Wasser dimethylformamidfrei gewaschen und bei 80 °C getrocknet. Man erhält 18,1 Teile Mischkristallpigment (Pigment Violet 19, γII-Phase).

9,5 Teile Mischkristallpigment werden mit 0,5 Teilen Pigmentdispergator der Formel (II) mechanisch gemischt. In dieser Formel (II) bedeutet P den Rest des linearen unsubstituierten Chinacridons und X die Sulfonamidgruppe (V), worin R⁷ ein Wasserstoffatom, R⁸ und R⁹ je eine Ethylgruppe, n die Zahl 3,0, o die Zahl 1,0 und m die Zahl 2,0 ist. Man erhält eine Pigmentzubereitung. Im AM-Lack werden transparente, farbtontiefe und farbstarke Lackierungen erhalten.

## Patentansprüche

1. Chinacridonmischkristallpigment, bestehend aus
a) 82,5 bis 99 Gew.-% an unsubstituiertem Chinacridon der γ-Phase der allgemeinen Formel (I), 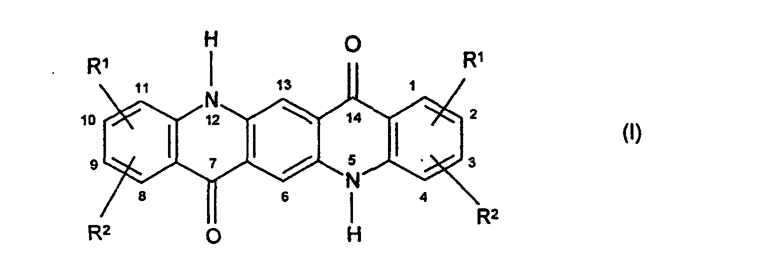 in welcher R¹ und R² Wasserstoffatome bedeuten und
b) 1 bis 17,5 Gew.-% eines oder mehrerer, in 2,9- und/oder 3,10- Stellung substituierter Chinacridone der allgemeinen Formel (I), worin die Substituenten R¹ und R² gleich oder verschieden sind und Chlor-, Brom-, Fluoratome oder C₁-C₄-Alkyl-, C₁-C₄-Alkoxy- oder Carbonamidgruppen, die durch C₁-C₆-Alkylgruppen substituiert sein können, und R¹ zusätzlich ein Wasserstoffatom sein kann, bedeuten.

2. Chinacridonmischkristallpigment nach Anspruch 1, bestehend aus 85 bis 95 Gew.-%, vorzugsweise 87 bis 93 Gew.-% der Komponente a) und 5 bis 15 Gew.-%, vorzugsweise 7 bis 13 Gew.-%, der Komponente b).

3. Chinacridonmischkristallpigment nach Anspruch 1 oder 2, **dadurch gekennzeichnet, daß** in Komponente b) R¹ die Bedeutung Wasserstoff, Chlor, Methyl, Methoxy oder Carbonamid, und R² die Bedeutung Chlor, Methyl, Methoxy oder Carbonamid hat.

4. Verfahren zur Herstellung eines Chinacridonmischkristallpigments nach einem oder mehreren der Ansprüche 1 bis 3, **dadurch gekennzeichnet, daß** man die der Verbindung a) zugrundeliegende 2,5-Dianilinoterephthalsäure der Formel (Ia) 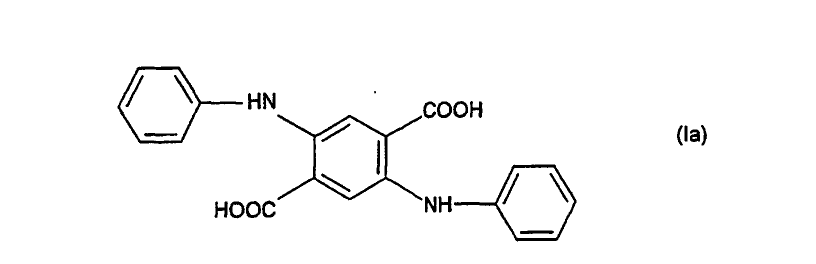 und die der Verbindung b) zugrundeliegende(n) substituierte(n) Terephthalsäure(n) der Formel (Ib) 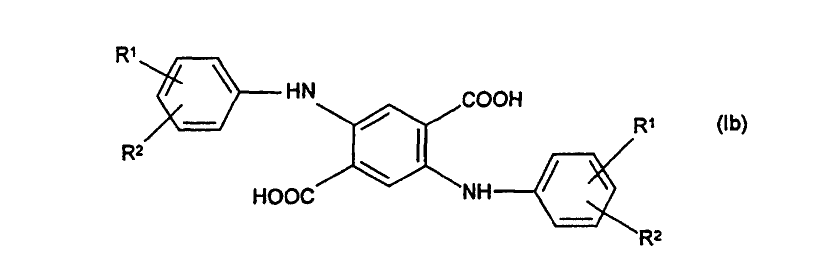 im Verhältnis 82,5 17,5 bis 99 1, vorzugsweise 85:15 bis 95:5, in Gegenwart von Polyphosphorsäure, einem Polyphosphorsäureester, vorzugsweise Polyphosphorsäuremethylester, oder einer Mischung davon, cyclisiert, das nach der Cyclisierung vorliegende Ringschlußgemisch durch Eindosieren in eine solche Menge an mindestens 70 gew.-%iger, vorzugsweise 75 bis 98 gew.-%iger, wäßriger Orthophosphorsäure bei einer Temperatur von mindestens 110°C hydrolysiert, daß bei Beendigung des Eindosierens eine mindestens 85 gew.-%ige wäßrige Orthophosphorsäure in der hydrolysierten Mischung vorliegt, und anschließend das Mischkristallpigment, gegebenenfalls nach einer Feinverteilung und/oder einer Finishbehandlung, isoliert.

5. Verfahren nach Anspruch 4, **dadurch gekennzeichnet, daß** der P₂O₅-Gehalt der Polyphosphorsäure oder des Polyphosphorsäureesters zwischen 80 und 87 Gew.-%, vorzugsweise zwischen 83 und 85 Gew.-%, liegt.

6. Verfahren nach Anspruch 4 oder 5, **dadurch gekennzeichnet, daß** bei einer Temperatur von 120 bis 180°C, vorzugsweise von 130 bis 160°C, hydrolysiert wird.

7. Verfahren nach einem oder mehreren der Ansprüche 4 bis 6, **dadurch gekennzeichnet, daß** mit einer solchen Menge Orthophosphorsäure hydrolysiert wird, daß bei Beendigung des Eindosierens eine 87 bis 98 gew.-%ige, vorzugsweise eine 88 bis 95 gew.-%ige, Orthophosphorsäure in der hydrolysierten Mischung vorliegt.

8. Verfahren nach einem oder mehreren der Ansprüche 4 bis 7, **dadurch gekennzeichnet, daß** das Eindosieren mit einem Konzentrationsgradienten von mindestens 10 % pro Minute, vorzugsweise von 50 bis 100 % pro Minute, durchgeführt wird.

9. Verfahren nach einem oder mehreren der Ansprüche 4 bis 8, **dadurch gekennzeichnet, daß** die Hydrolyse in einem statischen oder dynamischen Mischer erfolgt.

10. Verfahren nach einem oder mehreren der Ansprüche 4 bis 9, **dadurch gekennzeichnet, daß** die hydrolysierte Mischung mit Wasser oder verdünnter Orthophosphorsäure verdünnt und auf 120 bis 180°C erhitzt wird.

11. Pigmentzubereitung, bestehend im wesentlichen aus einem Chinacridonmischkristallpigment nach einem der Ansprüche 1 bis 3 und einem Pigmentdispergator, einem anionischen, kationischen oder nichtionogenen Tensid oder einer Mischung davon.

12. Pigmentzubereitung nach Anspruch 11, **dadurch gekennzeichnet, daß** der Gesamtgehalt an Pigmentdispergatoren und Tensiden 0,1 bis 20 Gew.-%, vorzugsweise 1 bis 10 Gew.-%, in der Pigmentzubereitung beträgt.

13. Pigmentzubereitung nach Anspruch 11 oder 12, **dadurch gekennzeichnet, daß** der Pigmentdispergator eine Verbindung der Formel (II)
P―Xₘ (II)
ist, in der
m eine Zahl zwischen 1 und 4 ist;
P für einen m-wertigen Rest eines linearen Chinacridons der allgemeinen Formel (I) gemäß Anspruch 1 steht, in dem R¹ und R² und Wasserstoffatome oder Methylgruppen darstellen,
X eine Gruppe der Formel (III)
-COOM (III)
oder eine Gruppe der Formel (IV)
-SO₃M (IV)
darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, oder ein Ammoniumion mit der Struktur N⁺R³R⁴R⁵R⁶ definiert, wobei die Substituenten R³, R⁴, R⁵ und R⁶ am quartären N-Atom einzeln für sich genommen sowie unabhängig voneinander jeweils als Wasserstoffatome oder C₁-C₃₀-Alkyl-, C₂-C₃₀-Alkenyl- oder C₅-C₃₀-Cycloalkylgruppen, die durch Hydroxy-, Di-(C₁-C₄-alkyl)amino-, Carboxy- oder Carboxamidgruppen, oder durch die Gruppe 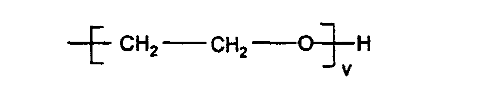 worin v eine Zahl zwischen 2 und 20 ist, oder durch die Gruppe C₂-C₆-Alkyl-N⁺R⁴R⁵R⁶ substituiert sein können, oder
X eine Gruppe der Formel (V) 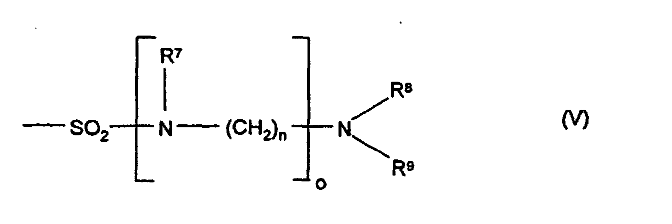 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches System bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6, o die Zahl 0 oder 1; oder
X eine Gruppe der Formel (VI) 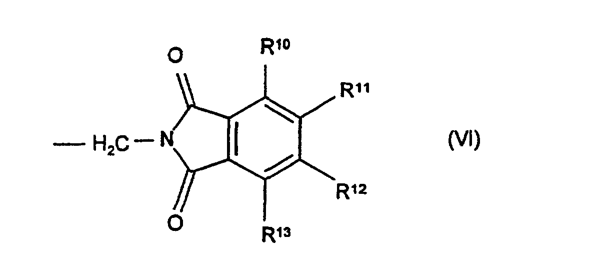 darstellt, wobei R¹⁰, R¹² und R¹³ ein Wasserstoff-, Fluor-, Chlor- oder Bromatom ist, und R¹¹ ein Wasserstoff-, Fluor-, Chlor-, Bromatom ist oder eine Nitro-, C₁-C₅-Alkyl-, C₁-C₆-Alkoxy- oder Benzoylaminogruppe bedeutet.

14. Verwendung eines Chinacridonmischkristallpigments nach einem der Ansprüche 1 bis 3 oder einer Pigmentzubereitung nach einem der Ansprüche 11 bis 13 als Farbmittel zum Pigmentieren von hochmolekularen organischen Materialien oder von Ink-Jet-Tinten.

15. Verwendung nach Anspruch 14, **dadurch gekennzeichnet; daß** das hochmolekular organische Material ein Kunststoff, ein Harz, ein Lack, eine Druckfarbe oder ein elektrophotographischer Toner oder Entwickler ist.

## Claims

1. A quinacridone mixed crystal pigment consisting of
a) from 82.5 to 99% by weight of unsubstituted γ-phase quinacridone of the formula (I) 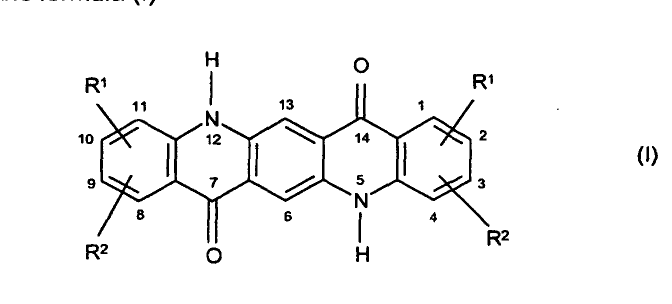 in which R¹ and R² are hydrogen atoms and
b) from 1 to 17.5% by weight of one or more 2,9- and/or 3,10-substituted quinacridones of the formula (I) in which the substituents R¹ and R² are identical or different and are chlorine, bromine or fluorine atoms or C₁-C₄-alkyl, C₁-C₄-alkoxy or carboxamido groups which can be substituted by C₁-C₆-alkyl groups, and R¹ can additionally be a hydrogen atom.

2. A quinacridone mixed crystal pigment as claimed in claim 1, consisting of from 85 to 95% by weight, preferably from 87 to 93% by weight, of component a) and from 5 to 15% by weight, preferably from 7 to 13% by weight, of component b).

3. A quinacridone mixed crystal pigment as claimed in claim 1 or 2, wherein R¹ in component b) has the definition hydrogen, chloro, methyl, methoxy or carboxamido and R² has the definition chloro, methyl, methoxy or carboxamido.

4. A process for preparing a quinacridone mixed crystal pigment as claimed in one or more of claims 1 to 3, which comprises cyclizing the 2,5-dianilinoterephthalic acid of the formula (Ia) 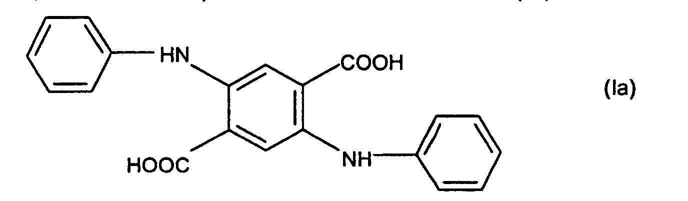 on which the compound a) is based and the substituted terephthalic acid(s) of the formula (Ib) 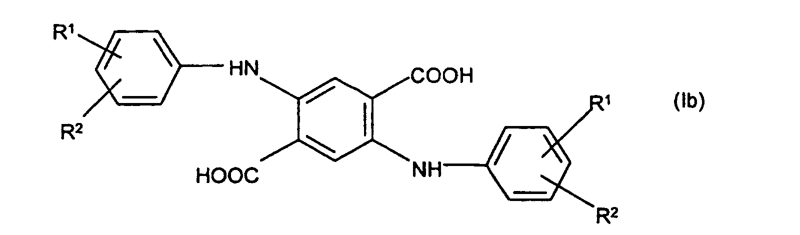 on which the compound b) is based in a ratio of from 82.5 : 17.5 to 99 : 1, preferably from 85:15 to 95:5, in the presence of polyphosphoric acid, a polyphosphoric ester, preferably polyphosphoric methyl ester, or a mixture thereof, hydrolyzing the ring closure mixture which is present after cyclization, at a temperature of at least 110°C, by metering into an amount of at least 70% strength by weight, preferably from 75 to 98% strength by weight, aqueous orthophosphoric acid which is such that at the end of the metered addition the concentration of aqueous orthophosphoric acid in the hydrolyzed mixture is at least 85% by weight, and then isolating the mixed crystal pigment, directly or following a fine division step and/or a finish treatment.

5. The process as claimed in claim 4, wherein the P₂O₅ content of the polyphosphoric acid or polyphosphoric ester is between 80 and 87% by weight, preferably between 83 and 85% by weight.

6. The process as claimed in claim 4 or 5, wherein hydrolysis is carried out at a temperature of from 120 to 180°C, preferably from 130 to 160°C.

7. The process as claimed in one or more of claims 4 to 6, wherein hydrolysis is carried out with an amount of orthophosphoric acid such that at the end of the metered addition the concentration of orthophosphoric acid in the hydrolyzed mixture is from 87 to 98% by weight, preferably from 88 to 95% by weight.

8. The process as claimed in one or more of claims 4 to 7, wherein the metered addition is conducted using a concentration gradient of at least 10% per minute, preferably from 50 to 100% per minute.

9. The process as claimed in one or more of claims 4 to 8, wherein the hydrolysis takes place in a static or dynamic mixer.

10. The process as claimed in one or more of claims 4 to 9, wherein the hydrolyzed mixture is diluted with water or dilute orthophosphoric acid and heated at from 120 to 180°C.

11. A pigment preparation consisting essentially of a quinacridone mixed crystal pigment as claimed in one of claims 1 to 3 and a pigment dispersant, an anionic, cationic or nonionic surfactant or a mixture thereof.

12. A pigment preparation as claimed in claim 11, wherein the overall content of pigment dispersants and surfactants is from 0.1 to 20% by weight, preferably from 1 to 10% by weight.

13. A pigment preparation as claimed in claim 11 or 12, wherein the pigment dispersant is a compound of the formula (II)
P―Xₘ (II)
in which
m is a number between 1 and 4;
P is an m-valent radical of a linear quinacridone of the formula (I) according to claim 1 in which R¹ and R² are hydrogen atoms or methyl groups,
X is a group of the formula (III)
-COOM (III)
or a group of the formula (IV)
-SO₃M (IV)
in which
M is the hydrogen ion H⁺ or the equivalent M^{r+}/r of an r-valent metal cation, where r is - for the case in question, uniformly - one of the numbers 1, 2 and 3, or an ammonium ion having the structure N⁺R³R⁴R⁵R⁶, where the substituents R³, R⁴, R⁵ and R⁶ on the quaternary nitrogen atom are each individually and independently of one another hydrogen atoms or C₁-C₃₀-alkyl, C₂-C₃₀-alkenyl or C₅-C₃₀-cycloalkyl groups, which can be substituted by hydroxyl, di(C₁-C₄-alkyl)amino, carboxyl or carboxamido groups, or by the group 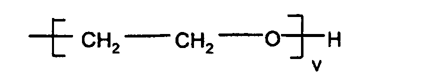 in which v is a number between 2 and 20, or by the group C₂-C₆-alkyl-N⁺R⁴R⁵R⁶, or
X is a group of the formula (V) 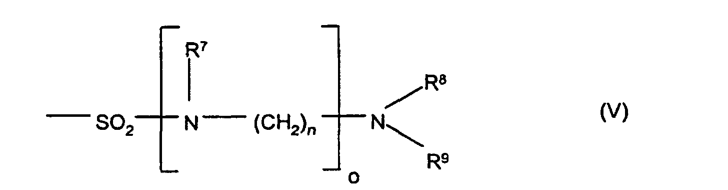 in which R⁸ and R⁹ independently of one another are each a hydrogen atom, a C₁-C₂₀-alkyl or C₂-C₂₀-alkenyl group or a C₅-C₇-cycloalkyl group, or in which R⁸ and R⁹, together with the adjacent nitrogen atom, form an aliphatic or aromatic, five- or six-membered heterocyclic system having in each case from 1 to 3 identical or different ring-member heteroatoms from the group consisting of nitrogen, oxygen and sulfur, R⁷ is a hydrogen atom or a C₁-C₄-alkyl group, n is a number from 1 to 6, o is the number 0 or 1; or
X is a group of the formula (VI) 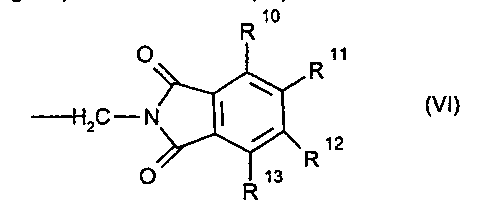 in which R¹⁰, R¹² and R¹³ are each a hydrogen, fluorine, chlorine or bromine atom and R¹¹ is a hydrogen, fluorine, chlorine or bromine atom or is a nitro, C₁-C₅-alkyl, C₁-C₆-alkoxy or benzoylamino group.

14. The use of a quinacridone mixed crystal pigment as claimed in one of claims 1 to 3 or of a pigment preparation as claimed in one of claims 11 to 13 as a colorant for pigmenting high molecular mass organic materials or inkjet inks.

15. The use as claimed in claim 14, wherein the high molecular mass organic material is a plastic, a resin, a coating material, a printing ink or an electrophotographic toner or developer.

## Revendications

1. Pigment quinacridonique à cristaux mixtes constitué par
a) 82,5 à 99 % en masse de quinacridone non substituée de la phase γ de formule générale (I) 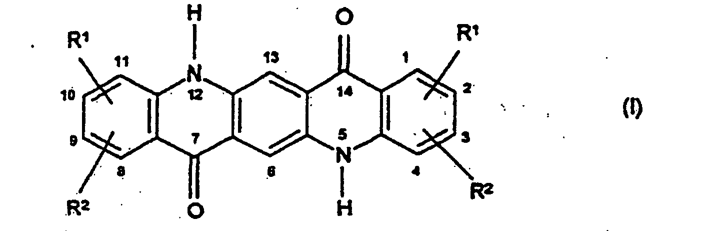 dans laquelle R¹ et R² représentent des atomes d'hydrogène et
b) 1 à 17,5 % en masse d'une ou plusieurs quinacridones substituées en position 2,9 et/ou 3,10 de formule générale (I), où les substituants R¹ et R² sont identiques ou différents et représentent des atomes de chlore, de brome, de fluor ou un groupe alkyle en C₁-C₄, alkoxy en C₁-C₄
ou carboxamido, qui peuvent être substitués par des groupes alkyle en C₁-C₆, et R¹ peut représenter de plus un atome d'hydrogène.

2. Pigment quinacridonique à cristaux mixtes selon la revendication 1, comprenant de 85 à 95 % en masse, de préférence de 87 à 93 % en masse du composant a) et de 5 à 15 % en masse de préférence de 7 à 13 % en massé du composant b).

3. Pigment quinacridonique à cristaux mixtes selon la revendication 1 ou 2, **caractérisé en ce que** dans le composant b) R¹ représente un atome d'hydrogène, de chlore, un groupe méthyle, méthoxy ou carboxamide, et R² représente un atome de chlore, un groupe méthyle, méthoxy ou carboxamido.

4. Procédé pour la préparation d'un pigment quinacridonique à cristaux mixtes selon une ou plusieurs des revendications 1 à 3, **caractérisé en ce qu'**on cyclise l'acide 2,5-dianilinotéréphtalique de formule (Ia) 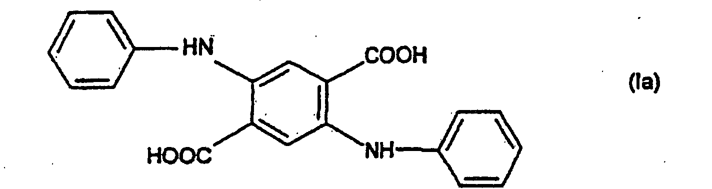 qui est à la base du composé a), et l'acide(s) téréphtalique(s) substitué(s) de formule (Ib) 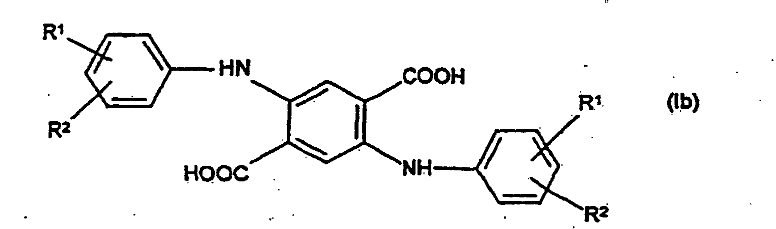 qui sont à la base du composé b), dans le rapport de 82,5:17,5 à 99:1, de préférence 85:15 à 95:5, en présence d'acide polyphosphorique, d'un ester de l'acide polyphosphorique, de préférence l'ester méthylique de l'acide polyphoshophorique ou d'un mélange de ces matières, on hydrolyse le mélange de fermeture du noyau présent après la cyclisation par ajout progressif d'une telle quantité d'acide orthophosphorique aqueux à au moins 70 % en masse, de préférence de 75 à 98 % en masse, à une température d'au moins 110°C, qu'un acide orthophosphorique aqueux à au moins 85 % en masse soit présent dans le mélange hydrolysé après la fin de l'ajout progressif, et ensuite on isole le pigment à cristaux mixtes, éventuellement après une division fine et/ou un traitement de finition.

5. Procédé selon la revendication 4, **caractérisé en ce que** la teneur en P₂O₅ de l'acide polyphosphorique ou de l'ester de l'acide polyphosphorique est comprise entre 80 et 87 % en masse, de préférence entre 83 à 85 % en masse.

6. Procédé selon la revendication 4 ou 5, **caractérisé en ce que** l'hydrolyse est mise en oeuvre à une température comprise entre 120 et 180°C, de préférence de 130 à 160°C.

7. Procédé selon une ou plusieurs des revendications 4 à 6, **caractérisé en ce qu'**on hydrolyse par une quantité d'acide orthophosphorique telle que, à la fin de l'ajout progressif, un acide orthophosphorique d'une concentration de 87 à 98 % en masse, de préférence de 88 à 95 % en masse, soit présent dans le mélange hydrolysé.

8. Procédé selon une ou plusieurs des revendications 4 à 7, **caractérisé en ce qu'**on met en oeuvre l'ajout progressif avec un gradient de concentration d'au moins 10 % par minute, de préférence de 50 à 100 % par minute.

9. Procédé selon une ou plusieurs des revendications 4 à 8, **caractérisé en ce que** l'hydrolyse est réalisée dans un mélangeur statique ou dynamique.

10. Procédé selon une ou plusieurs des revendications 4 à 9, **caractérisé en ce qu'**on dilue le mélange hydrolysé par l'eau ou par l'acide orthophosphorique dilué et on chauffe à une température de 120 à 180°C.

11. Préparation pigmentaire constituée essentiellement par un pigment quinacridonique à cristaux mixtes selon une ou plusieurs des revendications 1 à 3 et un dispersant de pigment, un agent de surface anionique, cationique ou non ionique ou un mélange de ces matières.

12. Préparation pigmentaire selon la revendication 11, **caractérisée en ce que** la teneur totale en dispersants de pigment et en agents de surface est de 0,1 à 20 % en masse, de préférence de 1 à 10 % en masse, dans la préparation pigmentaire.

13. Préparation pigmentaire selon la revendication 11 ou 12, **caractérisée en ce que** le dispersant de pigment est un composé de formule (II)
**P―X**_{**m**}
dans laquelle
m est un nombre compris entre 1 et 4 ;
P représente un reste m-valent d'une quinacridone linéaire de formule générale (I) selon la revendication 1, dans lequel R¹ et R² représentent des atomes d'hydrogène ou des groupes méthyle,
X représente un groupe de formule (III)
**-COOM** (III)
ou un groupe de formule (IV)
**-SO**_{**3**}**M** (IV)
où
M signifie l'ion hydrogène H⁺ ou l'équivalent M^{r+}/r d'un cation métal r-valent, où r pour le cas concerné est alors défini en concordance avec les nombres 1, 2 ou 3, ou un ion ammonium possédant la structure N⁺R³R⁴R⁵R⁶, où les substituants R³, R⁴, R⁵ et R⁶ sur l'atome de N quaternaire, pris indépendamment en soi, ainsi qu'indépendamment les uns des autres, représentent chacun des atomes d'hydrogène ou des groupes alkyle en C₁-C₃₀, alcényle en C₂-C₃₀ ou cycloalkyle en C₅-C₃₀, qui peuvent être substitués par des groupes hydroxy-di-(alkyl en C₁-C₄)amino, carboxy ou carboxamido, ou par le groupe 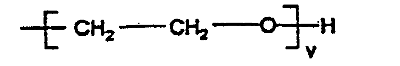 où v est un nombre compris entre 2 et 20, ou par le groupe (alkyl en C₂-C₆)N⁺R⁴R⁵R⁶, ou
X représente un groupe de formule (V) 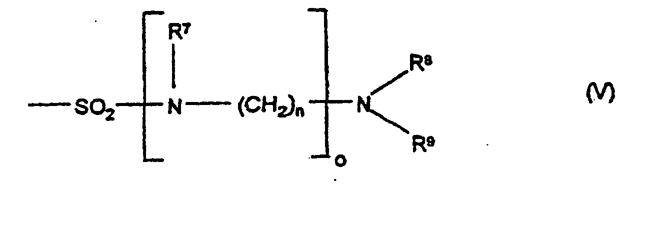 où R⁸ et R⁹ indépendamment l'un de l'autre représentent chacun un atome d'hydrogène, un groupe alkyle en C₁-C₂₀, alcényle en C₂-C₂₀ ou cycloalkyle en C₅-C₇, ou R⁸ et R⁹ conjointement avec l'atome d'azote limitrophe forment un système hétérocyclique de 5 ou 6 chaînons, aliphatique ou aromatique, chacun présentant 1 à 3 hétéroatomes identiques ou différents étant membres du cycle, pris dans le groupe comprenant les atomes d'azote, d'oxygène ou de soufre, R⁷ représente un atome d'hydrogène ou un groupe alkyle en C₁-C₄, n est un nombre de 1 à 6, o vaut 0 ou 1 ; ou
X représente un groupe de formule (VI) 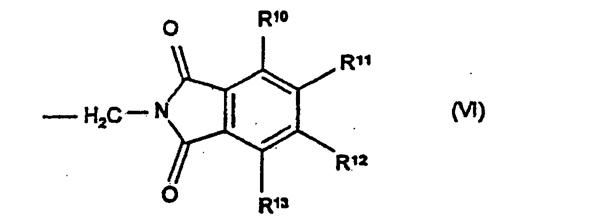 R¹⁰, R¹² et R¹³ représentent un atome d'hydrogène, de fluor, de chlore ou de brome, et R¹¹ représente un atome d'hydrogène, de fluor, de chlore, de brome ou un groupe nitro, alkyle en C₁-C₅, alkoxy en C₁-C₆ ou benzoylamino.

14. Utilisation d'un pigment quinacridonique à cristaux mixtes selon l'une des revendications 1 à 3 ou d'une préparation pigmentaire selon la revendication 11 à 13 comme colorant pour la pigmentation de matières organiques de haut poids moléculaire ou d'encres à jet.

15. Utilisation selon la revendication 14, **caractérisée en ce que** la matière organique de haut poids moléculaire est une matière plastique, une résine, un vernis, une encre d'impression ou un toner électrophotographique ou révélateur.
